# EUROPÄISCHE PATENTANMELDUNG

(11) **EP 4 008 508 A1**
(43) Veröffentlichungstag der Anmeldung: **08.06.2022**
(21) Anmeldenummer: 20211544.0
(22) Anmeldetag: 03.12.2020
(51) Int. Cl.: B27B 5/065, B27B 31/00

(54) **VERFAHREN ZUM ZERSÄGEN ZUMINDEST EINES WERKSTÜCKS**

(71) Anmelder: IMA Schelling Austria GmbH, 6858 Schwarzach (AT)
(72) Erfinder: Pöschl, Wolfgang, 6844 Altach (AT); Walch, Alexander, 6700 Bludenz (AT)
(74) Vertreter: Torggler & Hofmann Patentanwälte - Rankweil

(57) **Zusammenfassung**

Verfahren zum Zersägen zumindest eines Werkstücks (1), bestehend aus einer Platte oder einem Plattenstapel, mit einer Plattenaufteilanlage (2), wobei die Plattenaufteilanlage (2) einen Werkstückauflagetisch (3) und eine, entlang einer Sägelinie (4) verfahrbare Trennsäge (5) und einen Druckbalken (6) zum Andrücken des Werkstücks (1) auf den Werkstückauflagetisch (3) im Bereich der Sägelinie (4) und eine erste Vorschubeinrichtung (7) zum Verschieben des auf dem Werkstückauflagetisch (3) liegenden Werkstücks (1) und eine weitere Vorschubeinrichtung (8) zum Verschieben des auf dem Werkstückauflagetisch (3) liegenden Werkstücks (1) aufweist, wobei beide Vorschubeinrichtungen (7, 8) jeweils Klemmer (9, 10) zum Festklemmen des Werkstücks (1) aufweisen, wobei das Werkstück (1) zunächst mittels der ersten Vorschubeinrichtung (7) über der Sägelinie (4) positioniert wird und anschließend die weitere Vorschubeinrichtung (8) zum weiteren Positionieren des Werkstücks verwendet wird.

## Beschreibung

Die vorliegende Erfindung betrifft ein Verfahren gemäß des Oberbegriffs des Patentanspruchs 1. Darüber hinaus betrifft die Erfindung auch eine Plattenaufteilanlage, wie sie weiter unten im Detail geschildert wird.

Die DE 32 48 261 A1 offenbart sowohl ein gattungsgemäßes Verfahren als auch eine gattungsgemäße Plattenaufteilanlage. In dieser Schrift geht es vorrangig um die Frage, wie Werkstücke bestehend aus Platten oder Plattenstapeln, bei denen Kopfschnitte durchgeführt werden müssen, möglichst effektiv mit einer Plattenaufteilanlage zersägt werden können. Die Schrift offenbart u.a. zwei Vorschubeinrichtungen, welche dazu geeignet sind, Werkstücke unabhängig voneinander einer Sägelinie zuzuführen. Die beiden, der Sägelinie vorgeschalteten Vorschubeinrichtungen dieser Schrift sind auf voneinander verschiedenen Führungen verschiebbar gelagert, sodass sie auch aneinander vorbeigefahren werden können.

Aufgabe der Erfindung ist es, eine Verbesserung vorzuschlagen, wie bei einem gattungsgemäßen Verfahren das Aufteilen der Werkstücke bzw. das Zersägen der Werkstücke effektiver gestaltet werden kann, sodass die entlang der Sägelinie verfahrbare Trennsäge mit möglichst wenig Unterbrechungen und damit möglichst effektiv arbeiten kann.

Die Erfindung schlägt hierfür ein Verfahren gemäß Patentanspruch 1 vor.

Es ist somit erfindungsgemäß vorgesehen, dass bei dem Verfahren zumindest die folgenden Verfahrensschritte nacheinander ausgeführt werden:
a) Verschieben des an den Klemmern der ersten Vorschubeinrichtung festgeklemmten Werkstücks auf dem Werkstückauflagetisch mittels der ersten Vorschubeinrichtung zum Positionieren des Werkstücks über der Sägelinie;
b) Andrücken des Werkstücks auf den Werkstückauflagetisch im Bereich der Sägelinie mittels des Druckbalkens;
c) Lösen der Klemmer der ersten Vorschubeinrichtung vom Werkstück während das Werkstück vom Druckbalken weiterhin auf den Werkstückauflagetisch angedrückt wird;
d) Entfernen der ersten Vorschubeinrichtung vom Werkstück während das Werkstück vom Druckbalken weiterhin auf den Werkstückauflagetisch angedrückt wird;
e) Positionieren der weiteren Vorschubeinrichtung am Werkstück und Festklemmen des Werkstücks an den Klemmern der weiteren Vorschubeinrichtung während das Werkstück vom Druckbalken weiterhin auf den Werkstückauflagetisch angedrückt wird;
f) Zersägen des Werkstücks mittels der Trennsäge entlang der Sägelinie während zumindest einem der Verfahrensschritte c) bis e);
g) Abheben des Druckbalkens vom Werkstück;
h) Neu-Positionieren des an den Klemmern der weiteren Vorschubeinrichtung festgeklemmten Werkstücks über der Sägelinie mittels der weiteren Vorschubeinrichtung;
i) Andrücken des Werkstücks auf den Werkstückauflagetisch im Bereich der Sägelinie mittels des Druckbalkens;
j) Zersägen des Werkstücks mittels der Trennsäge entlang der Sägelinie.

In anderen Worten ist es somit ein Grundgedanke der Erfindung, das zu zersägende Werkstück zunächst mittels der ersten Vorschubeinrichtung der Sägelinie zuzuführen, um später die erste Vorschubeinrichtung vom Werkstück abzulösen und zurückzuziehen und das weitere Aufteilen bzw. Zersägen des Werkstücks dann mittels der weiteren Vorschubeinrichtung durchzuführen. Dies hat den Vorteil, dass, während das Zersägen bzw. das Aufteilen des Werkstücks unter Zuhilfenahme der weiteren Vorschubeinrichtung zu Ende geführt wird, die erste Vorschubeinrichtung bereits dazu verwendet werden kann, ein weiteres Werkstück, welches nachfolgend zersägt bzw. aufgeteilt werden soll, auszurichten und/oder zu greifen und/oder für die weitere Verarbeitung vorzubereiten. Hierdurch ist es möglich, die entlang der Sägelinie verfahrbare Trennsäge möglichst optimal auszulasten, indem diese ohne große Pausen mit möglichst wenig und möglichst kurzen Unterbrechungen arbeiten kann. Hierdurch kann die Produktivität des erfindungsgemäßen Verfahrens bzw. der Plattenaufteilanlage gegenüber dem Stand der Technik erhöht werden.

Beim erfindungsgemäßen Verfahren werden die Verfahrensschritte a) bis j) nacheinander ausgeführt. Dies schließt aber nicht aus, dass vor oder nach den Verfahrensschritten a) bis j) bei erfindungsgemäßen Verfahren auch andere Verfahrensschritte durchgeführt werden. Genauso gut ist es möglich, dass zwischen den Verfahrensschritten a) bis j) auch andere Verfahrensschritte zusätzlich ausgeführt werden. Die erfindungsgemäß einzuhaltende Reihenfolge der Verfahrensschritte a) bis j) bedeutet also nicht, dass all diese Verfahrensschritte zwingend unmittelbar nacheinander ausgeführt werden müssen. Insbesondere ist es möglich, dass zwischen den Verfahrensschritten b) und c) bereits zumindest einmal ein Zersägen des Werkstücks mittels der Trennsäge entlang der Sägelinie und ein anschließendes Neu-Positionieren des Werkstücks mittels der ersten Vorschubeinrichtung erfolgt, während das Werkstück noch an den Klemmern der ersten Vorschubeinrichtung festgeklemmt bleibt. Das Lösen der Klemmer der ersten Vorschubeinrichtung vom Werkstück gemäß Verfahrensschritt c) kann also vor oder während des ersten Trennschnitts an diesem Werkstück aber auch erst später, vor oder während eines späteren Trennschnitts an diesem Werkstück erfolgen.

Generell ist darauf hinzuweisen, dass in den Patentansprüchen in der Regel die Mindestkonfiguration angegeben ist. Entsprechend ist natürlich nicht ausgeschlossen, dass die genannten Bestandteile der verwendeten Plattenaufteilanlage wie auch die genannten Verfahrensschritte des erfindungsgemäßen Verfahrens auch mehrfach vorhanden sein bzw. ausgeführt werden können. Soweit nicht sinnstörend sind daher die Begriffe ein im Sinne von zumindest ein, zwei im Sinne von zumindest zwei, usw. zu verstehen.

Bei dem in den Patentansprüchen verwendeten Begriff des Werkstücks kann es sich um eine Platte, aber auch um einen Plattenstapel handeln. Das Werkstück kann vor der ersten Durchführung der Verfahrensschritte a) bis j) vollkommen unbearbeitet oder auch zumindest teilweise besäumt sein. Es kann sich bei dem Werkstück, an welchem dann die erfindungsgemäßen Verfahrensschritte a) bis j) ausgeführt werden, aber auch um ein, durch einen oder mehrere vorgeschaltete Säge- oder andere Bearbeitungsvorgänge vorab bearbeitetes Werkstück handeln. Darüber hinaus ist klar, dass das Werkstück während der Durchführung des erfindungsgemäßen Verfahrens natürlich in mehrere Werkstückteile zersägt bzw. aufgeteilt wird. Bei der Vielzahl der Möglichkeiten der Ausgestaltungsformen des erfindungsgemäßen Verfahrens würde eine strenge sprachliche Trennung zwischen dem Ausgangswerkstück und den durch die verschiedenen Sägevorgänge entstandenen Werkstückteilen zu einer unübersichtlichen Formulierung führen. Daher wird hier durchgehend von dem Werkstück gesprochen. Es kann sich dabei um das Ausgangswerkstück, aber auch um bereits durch Säge- oder andere Bearbeitungsvorgänge entstandene Werkstückteile handeln.

Der Druckbalken zum Andrücken des Werkstücks auf den Werkstückauflagetisch im Bereich der Sägelinie ist beim Stand der Technik in einer Vielzahl von Ausgestaltungsformen bekannt. Er könnte, allgemein gesprochen, auch als Andrückvorrichtung bezeichnet werden. Bei erfindungsgemäßen Verfahren und Plattenaufteilanlagen kann der Druckbalken z.B., wie an sich bekannt, als einzelner Balken oder als eine Kombination von mehreren Balken jeweils mit oder ohne Absaugung ausgestaltet sein. Der Begriff des Druckbalkens ist hier aber auch so allgemein aufzufassen, dass er im Sinne einer Andrückvorrichtung z.B. auch als ein oder mehrere Stempel ausgebildet sein kann, welcher bzw. welche dazu geeignet ist bzw. sind, das Werkstück auf den Werkstückauflagetisch im Bereich der Sägelinie anzudrücken. Letztendlich können verschiedenste beim Stand der Technik an sich bekannte Ausführungsformen des Druckbalkens bzw. allgemein gesprochen einer Andrückvorrichtung im Sinne des in den Patentansprüchen verwendeten Begriffs des Druckbalkens eingesetzt werden.

Auch der Begriff der Trennsäge ist entsprechend weit aufzufassen. Auch hier gibt es beim Stand der Technik verschiedenste Ausgestaltungsformen, welche grundsätzlich für erfindungsgemäße Verfahren und/oder Plattenaufteilanlagen eingesetzt werden können. Die Trennsäge muss letztendlich entlang der Sägelinie verfahrbar sein, um so das Werkstück zu zersägen. Bei der Trennsäge kann es sich z.B. um eine Kreissäge, insbesondere um eine sogenannte Unterflurkreissäge handeln, welche z.B. in einem Sägewagen entlang der Sägelinie verfahrbar ist. Die Kreissäge kann im Sägewagen heb- und senkbar angeordnet sein. Es kann ihr auch ein zusätzliches Vorritzer-Sägeblatt vorgeschaltet sein. Auch bei der Trennsäge können somit alle beim Stand der Technik an sich bekannten, für diesen Einsatzzweck geeigneten Ausgestaltungsformen von Sägen bei der Umsetzung der Erfindung zum Einsatz kommen.

Auch Vorschubeinrichtungen sind beim Stand der Technik an sich bekannt. Es handelt sich um Einrichtungen, die dazu geeignet sind, das auf dem Werkstückauflagetisch liegende Werkstück an ihren Klemmern festzuklemmen und auf dem Werkstückauflagetisch zur Sägelinie hin oder von der Sägelinie weg zu verschieben. Auch diese Vorschubeinrichtungen können bei der Umsetzung der Erfindung unterschiedlich und insbesondere wie im Stand der Technik an sich bekannt, ausgeführt sein. Dasselbe gilt für die Klemmer der Vorschubeinrichtungen. Es handelt sich bei den Klemmern um Einrichtungen, die dazu geeignet sind, das Werkstück klemmend an der Vorschubeinrichtung zu befestigen, z.B. indem das Werkstück zwischen zwei Klemmfingern des jeweiligen Klemmers festgeklemmt wird. Auch hier gibt es beim Stand der Technik verschiedenste Ausgestaltungsformen, die bei der Realisierung der Erfindung eingesetzt werden können.

Auch für den Werkstückauflagetisch gibt es beim Stand der Technik verschiedenste Ausgestaltungsformen, die im Sinne der Erfindung eingesetzt werden können. Es kann sich z.B. um sogenannte Luftkissentische aber auch um Rollentische, um Bürstentische und dergleichen handeln. Der Werkstückauflagetisch hat eine in der Regel horizontale Werkstückauflagefläche, auf der das Werkstück aufliegen und zur Sägelinie oder von der Sägelinie weg geschoben werden kann. Die Sägelinie kann durch den Werkstückauflagetisch bzw. dessen Oberfläche hindurchführen.

Die Sägelinie ist in der Regel linear also gerade ausgeführt. Grundsätzlich sind bei der Erfindung natürlich aber auch gekrümmte Sägelinienverläufe nicht ausgeschlossen.

Bevorzugte Ausgestaltungsformen des erfindungsgemäßen Verfahrens sehen vor, dass das Werkstück vor dem Verfahrensschritt a), vorzugsweise mittels der ersten Vorschubeinrichtung und/oder mittels zumindest einer Ausrichteinrichtung der Plattenaufteilanlage, auf dem Werkstückauflagetisch ausgerichtet wird. Je nachdem, in welcher Qualität das Werkstück vor Beginn der Bearbeitung vorliegt, kann auch vorgesehen sein, dass das Werkstück vor dem Verfahrensschritt a) mittels eines Besäumwerkzeugs der Plattenaufteilanlage an zumindest einer Außenkante des Werkstücks besäumt wird. Beim Besäumen wird, wie allgemein bekannt, die Außenkante des Werkstücks mittels eines Besäumwerkzeugs so bearbeitet, dass sich eine gerade Außenkante des Werkstücks ergibt. An sich bekannte Besäumwerkzeuge sind z.B. Sägen, Fräseinrichtungen und dergleichen.

Grundsätzlich ist es bei der Umsetzung der Erfindung möglich, für die erste und für die weitere Vorschubeinrichtung jeweils eine eigene Führung vorzusehen, wie dies beim eingangs genannten Stand der Technik realisiert ist. Erfindungsgemäße Verfahren haben aber den Vorteil, dass sie in bevorzugten Ausgestaltungsformen auch mit einer technisch weniger aufwendigen Art der Führung der Vorschubeinrichtungen ausgeführt werden können. So sehen bevorzugte Ausgestaltungsformen der Erfindung vor, dass die erste Vorschubeinrichtung und die weitere Vorschubeinrichtung hintereinander in einer gemeinsamen Führung der Plattenaufteilanlage über dem Werkstückauflagetisch verschoben werden, wobei die erste Vorschubeinrichtung ausschließlich auf der von der Sägelinie abgewandten Seite der weiteren Vorschubeinrichtung in der gemeinsamen Führung verschiebbar ist. Durch die gemeinsame Führung für die erste Vorschubeinrichtung und die weitere Vorschubeinrichtung wird somit zumindest eine Führung eingespart. Das Merkmal, dass die erste Vorschubeinrichtung ausschließlich auf der von der Sägelinie abgewandten Seite der weiteren Vorschubeinrichtung in der gemeinsamen Führung verschiebbar ist, bedeutet, dass die erste Vorschubeinrichtung nicht an der weiteren Vorschubeinrichtung vorbeigefahren werden kann. In anderen Worten können in diesen Ausgestaltungsformen die Vorschubeinrichtungen auf dem Weg hin zur Sägelinie oder von der Sägelinie weg nicht aneinander vorbeigefahren werden, da sie eben an der gemeinsamen Führung verschiebbar gelagert sind.

Bevorzugt ist bei erfindungsgemäßen Verfahren vorgesehen, dass das Werkstück während des Verfahrensschrittes a) von der ersten Vorschubeinrichtung zwischen der weiteren Vorschubeinrichtung und dem Werkstückauflagetisch hindurchgeschoben wird. In diesen Ausgestaltungsformen befindet sich die weitere Vorschubeinrichtung somit in einer Art Warteposition, während das Werkstück von der ersten Vorschubeinrichtung unter der zweiten Vorschubeinrichtung hindurchgeschoben werden kann. Günstig ist es auch, wenn die Klemmer der weiteren Vorschubeinrichtung während der Verfahrensschritte a) bis d) in einer vom Werkstückauflagetisch distanzierten Position angeordnet werden.

Wie eingangs bereits angedeutet, ermöglicht es das erfindungsgemäße Verfahren in bevorzugten Ausgestaltungsformen, dass während zumindest eines der Verfahrensschritte e) bis j), an den Klemmern der ersten Vorschubeinrichtung ein weiteres Werkstück festgeklemmt wird. Vorzugsweise kann das weitere Werkstück dann von der ersten Vorschubeinrichtung auf dem Werkstückauflagetisch ein Stück weit in Richtung hin zur Sägelinie verschoben werden. Bei dem weiteren Werkstück handelt es sich günstigerweise um das Werkstück, welches als nächstes mit dem erfindungsgemäßen Verfahren zersägt bzw. aufgeteilt werden soll. Es kann sich bei dem weiteren Werkstück um ein Werkstück handeln, welches bisher noch nicht bearbeitet wurde und aus einem Plattenlager oder dergleichen der ersten Vorschubeinrichtung zugeführt wird. Es kann sich bei dem weiteren Werkstück aber genauso gut auch um ein Werkstück handeln, welches bei einem vorgeschalteten Sägevorgang entstanden ist. Bevor das weitere Werkstück an den Klemmer der ersten Vorschubeinrichtung festgeklemmt wird, kann es natürlich auch ausgerichtet und/oder besäumt werden, wie dies für das Werkstück weiter oben bereits geschildert wurde.

Die Verfahrensschritte g) bis j) können unter Verwendung der weiteren Vorschubeinrichtung nur ein einziges Mal ausgeführt werden. Es kann aber genauso gut vorgesehen sein, dass die Verfahrensschritte g) bis j) unter Verwendung der weiteren Vorschubeinrichtung mehrfach hintereinander ausgeführt werden.

Grundsätzlich kann mit dem erfindungsgemäßen Verfahren eine Vielzahl von Sägevorgängen bzw. Trennschnitten an einem einzelnen Werkstück ausgeführt werden. Die erfindungsgemäße Übernahme des zunächst von der ersten Vorschubeinrichtung zur Sägelinie verschobenen und dort positionierten Werkstücks durch die weitere Vorschubeinrichtung kann grundsätzlich, wie bereits erläutert, während des ersten, zweiten, dritten und auch eines späteren Trennschnitts erfolgen. Um die erste Vorschubeinrichtung aber möglichst rasch für das Greifen und gegebenenfalls Vorpositionieren des anschließend zu zersägenden weiteren Werkstücks freizubekommen, sehen bevorzugte Ausgestaltungsformen der Erfindung vor, dass die Übernahme des Werkstücks von der ersten Vorschubeinrichtung durch die weitere Vorschubeinrichtung bereits während des ersten Trennschnitts, also des ersten Sägevorgangs am Werkstück erfolgt. Dies ist dann der Fall, wenn das Zersägen des Werkstücks mittels der Trennsäge entlang der Sägelinie während des Verfahrensschrittes f) der erste Trennschnitt am ursprünglichen, vorzugsweise bereits besäumten, Werkstück ist. In einem solchen Fall können dann die Verfahrensschritte a) bis j) auch unmittelbar aufeinander folgend ausgeführt werden.

Zusätzlich zu der ersten Vorschubeinrichtung und zur weiteren Vorschubeinrichtung kann bei erfindungsgemäßen Verfahren auch ein sogenanntes Handling-Gerät eingesetzt werden. Dieses Handling-Gerät ist günstigerweise über der ersten Vorschubeinrichtung und/oder der weiteren Vorschubeinrichtung verfahrbar gelagert. Es kann dazu eingesetzt werden, Werkstücke auf dem Werkstückauflagetisch zu transportieren und/oder zu drehen und/oder vom Werkstückauflagetisch abzuheben oder auf diesem abzulegen. In diesem Sinne sehen bevorzugte Ausgestaltungsformen des erfindungsgemäßen Verfahrens vor, dass das Werkstück mittels eines über der ersten Vorschubeinrichtung und/oder der weiteren Vorschubeinrichtung verfahrbar gelagerten Handlinggerätes über dem Werkstückauflagetisch transportiert und/oder gedreht und/oder mittels des Handlinggerätes vom Werkstückauflagetisch abgehoben und/oder auf diesem abgelegt wird.

Das Handling-Gerät kann dabei für unterschiedlichste Aufgabenstellungen eingesetzt werden. Besonders bevorzugt ist aber vorgesehen, dass das Werkstück mittels des Handlinggerätes der ersten Vorschubeinrichtung vor dem Verfahrensschritt a) zugeführt wird.

Wie eingangs bereits dargelegt, können erfindungsgemäße Verfahren grundsätzlich auf Plattenaufteilanlagen durchgeführt werden, wie sie aus dem eingangs genannten Stand der Technik bekannt sind. Bei solchen Plattenaufteilanlagen sind die erste Vorschubeinrichtung und die weitere Vorschubeinrichtung auf jeweils separaten Führungen geführt und können auf dem Weg hin zur Sägelinie und von der Sägelinie weg aneinander vorbeigefahren werden.

Abweichend hiervon sehen bevorzugte erfindungsgemäße Plattenaufteilanlagen aber eine gerätetechnisch weniger aufwendige Lösung vor. Es handelt sich dabei um Plattenaufteilanlagen zum Zersägen von zumindest einem Werkstück bestehend aus einer Platte oder einem Plattenstapel. Diese Plattenaufteilanlagen können zur Umsetzung des erfindungsgemäßen Verfahrens eingesetzt werden. Es handelt sich um Plattenaufteilanlagen, welche einen Werkstückauflagetisch und eine, entlang einer Sägelinie verfahrbare Trennsäge und einen Druckbalken zum Andrücken des Werkstücks auf den Werkstückauflagetisch im Bereich der Sägelinie und eine erste Vorschubeinrichtung zum Verschieben des auf den Werkstückauflagetisch liegenden Werkstücks und eine weitere Vorschubeinrichtung zum Verschieben des auf dem Werkstückauflagetisch liegenden Werkstücks aufweist, wobei beide Vorschubeinrichtungen jeweils Klemmer zum Festklemmen des Werkstücks aufweisen. Bei solchen Plattenaufteilanlagen ist dann bevorzugt vorgesehen, dass die erste Vorschubeinrichtung und die weitere Vorschubeinrichtung hintereinander in einer gemeinsamen Führung der Plattenaufteilanlage über dem Werkstückauflagetisch verschiebbar gelagert sind, und die erste Vorschubeinrichtung ausschließlich auf der von der Sägelinie abgewandten Seite der weiteren Vorschubeinrichtung in der gemeinsamen Führung verschiebbar ist. Dadurch, dass die erste Vorschubeinrichtung und die weitere Vorschubeinrichtung in einer gemeinsamen Führung hintereinander geführt sind, kann auf eine zusätzliche zweite Führung verzichtet werden. Dass die erste Vorschubeinrichtung ausschließlich auf der von der Sägelinie abgewandten Seite der weiteren Vorschubeinrichtung in der gemeinsamen Führung verschiebbar ist, bedeutet wiederum, dass die Vorschubeinrichtungen auf ihrem Weg zur Sägelinie hin und von der Sägelinie weg nicht aneinander vorbeigefahren werden können.

Wie eingangs bereits bezüglich des Verfahrens geschildert, können Vorschubeinrichtungen in unterschiedlichsten Ausgestaltungsformen für die Umsetzung der Erfindung eingesetzt werden. Bevorzugte Ausgestaltungsformen sehen jedoch vor, dass die erste Vorschubeinrichtung und die weitere Vorschubeinrichtung jeweils einen in Richtung parallel zur Sägelinie längserstreckten Träger aufweisen, wobei die Träger hintereinander in der gemeinsamen Führung über dem Werkstückauflagetisch verschiebbar gelagert sind und die Klemmer der jeweiligen Vorschubeinrichtung am Träger der jeweiligen Vorschubeinrichtung, vorzugsweise verschiebbar, angeordnet sind. Durch die vorzugsweise vorgesehene Verschiebbarkeit der Klemmer entlang des jeweiligen Trägers kann die Position der Klemmer entlang der Träger an die Breite des jeweils zu greifenden und zu zersägenden Werkstücks angepasst werden. Hierbei ist allerdings darauf hinzuweisen, dass die Verschiebbarkeit der Klemmer am Träger natürlich nur ein optionales Merkmal ist. Günstige Varianten solcher Plattenaufteilanlagen sehen vor, dass die gemeinsame Führung zwei voneinander distanziert angeordnete Führungsschienen aufweist, wobei die Träger der Vorschubeinrichtungen hintereinander in den Führungsschienen gelagert sind. Bevorzugt kann auch vorgesehen sein, dass die Klemmer der ersten Vorschubeinrichtung und/oder die Klemmer der weiteren Vorschubeinrichtung in Richtung zum Werkstückauflagetisch hin absenkbar und in Richtung vom Werkstückauflagetisch weg abhebbar und/oder individuell an der jeweiligen Vorschubeinrichtung parallel zur Sägelinie verschiebbar ausgebildet sind.

Bei bevorzugten Ausgestaltungsformen erfindungsgemäßer Plattenaufteilanlagen ist vorgesehen, dass sie ein über der ersten Vorschubeinrichtung und/oder der weiteren Vorschubeinrichtung verfahrbar gelagertes Handlinggerät aufweist. Hierbei sehen bevorzugte Ausgestaltungsformen der Erfindung wiederum vor, dass das Handlinggerät eine Werkstückgreifvorrichtung, vorzugsweise Saugvorrichtung, zum Greifen des Werkstücks und/oder eine Drehvorrichtung zum Drehen des Werkstücks und/oder eine Heb- und Senkvorrichtung zum Anheben und zum Absenken des Werkstücks aufweist.

Wie bezüglich des Verfahrens bereits erläutert, können solche Handlinggeräte sehr universell für verschiedenste Aufgabenstellungen eingesetzt werden. Besonders bevorzugt werden diese Handlinggeräte aber dazu eingesetzt, die im Anschluss zu bearbeitenden bzw. zu zersägenden Werkstücke vor der ersten Durchführung der erfindungsgemäßen Verfahrensschritte der ersten Vorschubeinrichtung zuzuführen. In diesem Sinne ist günstigerweise vorgesehen, dass das Werkstück mittels des Handlinggeräts in einen Zuführbereich auf dem Werkstückauflagetisch zuführbar ist und der Zuführbereich in einem Arbeitsbereich der ersten Vorschubeinrichtung liegt, in dem die erste Vorschubeinrichtung das Werkstück an seinen Klemmern festklemmen kann und aus dem die erste Vorschubeinrichtung das Werkstück zur Sägelinie schieben kann. Bevorzugte Varianten sehen dabei vor, dass im Zuführbereich zumindest eine Ausrichteinrichtung der Plattenaufteilanlage zum Ausrichten des Werkstücks auf dem Werkstückauflagetisch angeordnet ist und/oder dass im Zuführbereich ein Besäumwerkzeug der Plattenaufteilanlage zum Besäumen des Werkstücks an zumindest einer Außenkante des Werkstücks angeordnet ist.

Weitere Merkmale und Einzelheiten bevorzugter Ausgestaltungsformen der Erfindung werden nachfolgend in der Figurenbeschreibung anhand eines Ausführungsbeispiels erläutert. Es zeigen:
- Fig. 1: eine perspektivische schematische Darstellung einer erfindungsgemäßen Plattenaufteilanlage an der auch das erfindungsgemäße Verfahren durchgeführt werden kann;
- Fig. 2: eine schematisierte Seitenansicht zur Plattenaufteilanlage aus Fig.1 im Bereich vor der Sägelinie aus Fig. 1;
- Fig. 3: eine schematisierte Seitenansicht zur Plattenaufteilanlage aus Fig.1 im Bereich des Besäumwerkzeugs;
- Fig. 4: eine Alternative zu Fig. 3 und
- Fig. 5 bis 16: zwei Serien zu verschiedenen Zwischenzuständen bei der Durchführung des erfindungsgemäßen Verfahrens in schematisierten Draufsichten.

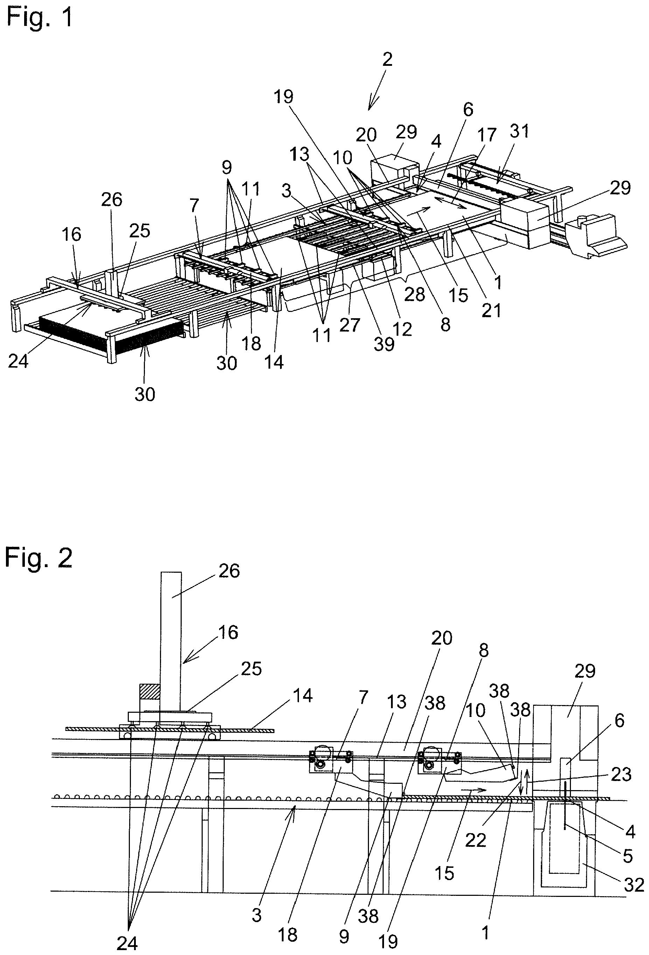

Fig. 1 zeigt eine schematisierte Darstellung in einer Ansicht von schräg oben auf eine Plattenaufteilanlage 2 mit der das erfindungsgemäße Verfahren durchgeführt werden kann und welche auch als erfindungsgemäße Plattenaufteilanlage 2 ausgebildet ist.

Die erfindungsgemäße Plattenaufteilanlage 2 weist einen hier als Rollentisch ausgeführten Werkstückauflagetisch 3 auf. Alternativ könnte es sich bei dem Werkstückauflagetisch 3 natürlich auch um an sich bekannte Luftkissentische, Borstentische oder dergleichen handeln. Auf dem Werkstückauflagetisch 3 liegend können die Werkstücke 1 der Sägelinie 4 zugeführt werden. An der Sägelinie 4 befindet sich eine in Fig. 1 nicht sichtbare Trennsäge 5, welche entlang der Sägelinie 4 verfahrbar ist, um die Werkstücke 1 zu zersägen. Über der Sägelinie 4 befindet sich der an zwei Druckbalkenstehern 29 heb- und senkbar geführte Druckbalken 6, welcher dazu dient, das Werkstück 1 während des Sägevorgangs auf den Werkstückauflagetisch 3 zu drücken. Dies ist an sich bekannt. Solche Druckbalken 6 können in unterschiedlichsten Ausgestaltungsformen ausgeführt sein und auch eine Absaugung für die beim Sägevorgang entstehenden Späne aufweisen, so wie dies eingangs bereits erläutert wurde. Um das auf dem Werkstückauflagetisch 3 liegende Werkstück 1 zur Sägelinie 4 hin transportieren zu können, weist die Plattenaufteilanlage 2 die erste Vorschubeinrichtung 7 und die weitere Vorschubeinrichtung 8 auf. Natürlich könnte die weitere Vorschubeinrichtung 8 in dieser wie auch in anderen Ausführungsvarianten als zweite Vorschubeinrichtung bezeichnet werden. Die erste Vorschubeinrichtung 7 und die weitere Vorschubeinrichtung 8 sind hintereinander in einer gemeinsamen Führung 13 der Plattenaufteilanlage 2 über dem Werkstückauflagetisch 3 verschiebbar gelagert. Die erste Vorschubeinrichtung 7 ist ausschließlich auf der von der Sägelinie 4 abgewandten Seite der weiteren Vorschubeinrichtung 8 in der gemeinsamen Führung 13 verschiebbar. Die erste Vorschubeinrichtung 7 weist einen in Richtung 17 parallel zur Sägelinie 4 längserstreckten Träger 18 auf. Am Träger 18 sind die Klemmer 9 der ersten Vorschubeinrichtung 7 angeordnet. Die weitere Vorschubeinrichtung 8 ist analog dazu aufgebaut. Auch sie weist einen in Richtung 17 parallel zur Sägelinie 4 längserstreckten Träger 19 auf, an welchem wiederum die Klemmer 10 der weiteren Vorschubeinrichtung 8 angeordnet sind. Die Träger 18 und 19 sind hintereinander in der gemeinsamen Führung 13 verschiebbar gelagert. Die Antriebe zum Verschieben der ersten Vorschubeinrichtung 7 und der weiteren Vorschubeinrichtung 8 in Richtung 15 hin zur Sägelinie 4 und in der entgegengesetzten Richtung können wie beim Stand der Technik an sich bekannt ausgeführt sein und müssen nicht gesondert erläutert werden. Das Gleiche gilt für die Antriebe, mit denen die Klemmer 9 bzw. 10 der jeweiligen Vorschubeinrichtung 7 bzw. 8 in Richtung 22 zum Werkstückauflagetisch 3 hin absenkbar und in Richtung 23 vom Auflagetisch 3 weg anhebbar am jeweiligen Träger 18 bzw. 19 gelagert sind. Auch dies kann, wie beim Stand der Technik bekannt, ausgeführt sein, genauso wie die Antriebe zum Festklemmen des Werkstücks 1 am jeweiligen Klemmer 9, 10. Um die Position der Klemmer 9 bzw. 10 in Richtung 17 parallel zur Sägelinie 4 an die Breite des jeweils zu bearbeitenden Werkstücks 1 anpassen zu können, ist günstigerweise vorgesehen, dass die Klemmer 9 der ersten Vorschubeinrichtung 7 wie auch die Klemmer 10 der weiteren Vorschubeinrichtung 8 am jeweiligen Träger 18 bzw. 19 in Richtung 17 parallel zur Sägelinie 4 verschiebbar sind. Die Klemmer 9 bzw. 10 weisen jeweils an sich bekannte Klemmbacken 38 auf, zwischen denen das Werkstück 1 jeweils festgeklemmt werden kann. Solche Vorschubeinrichtungen 7 und 8 sind, für sich jeweils alleine gesehen, an sich bekannt und müssen nicht genauer erläutert werden. Auch beim Stand der Technik an sich bekannte alternative Ausgestaltungsformen von Vorschubeinrichtungen können bei entsprechender Eignung zur Realisierung der Erfindung eingesetzt werden.

Die gemeinsame Führung 13 für die erste Vorschubeinrichtung 7 und die weitere Vorschubeinrichtung 8 weist im gezeigten Ausführungsbeispiel die beiden Führungsschienen 20 und 21 auf, welche günstigerweise, wie hier auch realisiert, in horizontaler Richtung orthogonal zur Sägelinie 4 verlaufen. Die Träger 18 und 19 der Vorschubeinrichtung 7 und 8 sind hintereinander in den Führungsschienen 20 und 21 gelagert.

Zusätzlich zu den bereits genannten Vorschubeinrichtungen 7 und 8 weist die hier gezeigte Plattenaufteilanlage 2 auch ein Handlinggerät 16 auf, welches in diesem Ausführungsbeispiel über der ersten Vorschubeinrichtung 7 und der weiteren Vorschubeinrichtung 8 verfahrbar gelagert ist. Im konkret gezeigten Beispiel fährt das Handlinggerät 16 in Richtung 15 hin zur Sägelinie 4 und in der entgegengesetzten Richtung auf den Führungsschienen 20 und 21 der gemeinsamen Führung 13 für die Vorschubeinrichtungen 7 und 8. Dies muss aber natürlich nicht zwingend so sein. Das Handlinggerät 16 könnte auch in anderer Art und Weise z.B. auf separaten Schienen verfahrbar gelagert sein. Solche Handlinggeräte 16 sind an sich bekannt. In bevorzugten Ausgestaltungsformen, wie der hier gezeigten, weist das Handlinggerät 16 eine Werkstückgreifvorrichtung 24 auf, welche hier in diesem Ausführungsbeispiel als an sich bekannte Saugvorrichtung ausgebildet ist. Mit dieser Werkstückgreifvorrichtung 24 können Werkstücke 1 am Handlinggerät 16 befestigt und von diesem wieder gelöst werden. Das Handlinggerät 16 kann zusätzlich, wie hier auch realisiert, eine an sich bekannte Drehvorrichtung 25 aufweisen, mit der Werkstücke 1 um eine vertikale Achse gedreht werden können. Zusätzlich weist das Handlinggerät 16, wie hier auch realisiert, günstigerweise eine Heb- und Senkvorrichtung 26 auf, die es erlaubt, die Werkstückgreifvorrichtung 24 mit und ohne daran befestigtem Werkstück 1 in vertikaler Richtung anzuheben und abzusenken. Zusätzlich ist das Handlinggerät 16 bzw. dessen Werkstückgreifvorrichtung 24 günstigerweise auch in Richtung 17 parallel zur Sägelinie 4 verfahrbar ausgebildet. All dies ist an sich bekannt und muss hier nicht weiter erläutert werden. Mit dem hier gezeigten Handlinggerät 16 können Werkstücke 1 angehoben, abgelegt, transportiert und um eine vertikale Achse gedreht werden. Das Handlinggerät 16 ist aufgrund dieser Eigenschaften und seiner verschiebbaren Positionierung über den Vorschubeinrichtungen 7 und 8 für zahlreiche verschiedene Aufgabenstellungen einsetzbar. Besonders bevorzugt wird es aber dafür verwendet, das Werkstück 1 von dem in Fig. 1 gezeigten Plattenlager 30 abzuholen und in den Zuführbereich 27 auf dem Werkstückauflagetisch 3 zuzuführen. Der Zuführbereich 27 liegt günstigerweise in dem Arbeitsbereich 28 der ersten Vorschubeinrichtung 7, sodass die erste Vorschubeinrichtung 7 das dort insbesondere vom Handlinggerät 16 abgelegte Werkstück 1 an seinem Klemmer 9 festklemmen kann, um es anschließend in Richtung hin zur Sägelinie 4 zu schieben.

Das Werkstück 1 kann, wie weiter oben beschrieben, als einzelne Platte, aber auch als Plattenstapel ausgebildet sein. Die hier dargestellte Art des Handlinggerätes 16 mit seiner als Saugvorrichtung ausgebildeten Werkstückgreifvorrichtung 24 kann grundsätzlich immer nur eine Platte greifen und transportieren. Es ist aber möglich, durch mehrfaches Hin- und Herfahren und Greifen von Einzelplatten, im Zuführbereich 27 ein Werkstück 1 in Form eines Plattenstapels aufzustapeln und so zur weiteren Bearbeitung bereitzustellen. Natürlich kann auch nur eine einzelne Platte als Werkstück 1 in diesen Zuführbereich 27 hineingelegt werden. Der Vollständigkeit halber wird aber auch darauf hingewiesen, dass es natürlich andere beim Stand der Technik an sich bekannte Möglichkeiten zur Zuführung von Werkstücken 1 in Form von Einzelplatten oder von Plattenstapeln in den Zuführbereich 27 gibt. Diese Möglichkeiten reichen von einem händischen Zuführen durch Bedienpersonal bis hin zu mit hebbaren und senkbaren Tischen ausgebildeten Plattenlagern 30 und entsprechenden Schiebern, welche dazu geeignet sind, die im Plattenlager 30 auf die entsprechende Höhe gehobenen Platten einzeln oder als Plattenstapel auf den Werkstückauflagetisch 3 in Zuführbereich 27 zu schieben. Auch dies ist an sich bekannt und muss nicht weiter erläutert werden. Mit solchen Arten der Zuführung kann jedenfalls ein Werkstück 1 in Form einer Einzelplatte wie auch eines Plattenstapels im Zuführbereich 27 bereitgelegt werden.

In Richtung 15 hinter der Sägelinie 4 befindet sich in dem hier gezeigten Ausführungsbeispiel ein Entnahmebereich 31. In diesem können die an der Sägelinie 4 abgesägten Werkstückteile des Werkstücks 1 von Hand durch Bedienpersonal oder durch eine entsprechend automatisierte Entnahmeeinrichtung entnommen bzw. entgegengenommen werden. Hinter dem Entnahmebereich 31 können hier nicht dargestellte Plattenlager, weitere Sägelinien und andere an sich bekannte Einrichtungen zur Weiterverarbeitung und/oder Lagerung der Werkstücke 1 vorgesehen sein. Hierzu gibt es zahlreiche verschiedene Ausgestaltungsformen. Die hier gezeigte Plattenaufteilanlage 2 kann also in eine größere Plattenaufteilanlage mit mehreren Sägen und/oder anderen bzw. zusätzlichen Bearbeitungsstationen eingebunden sein.

Um das Werkstück 1, sei es nun in Form einer einzelnen Platte oder eines Plattenstapels, vor der Befestigung an den Klemmern 9 der ersten Vorschubeinrichtung 7 im Zuführbereich 27 ausrichten zu können, sind im Zuführbereich 27 an sich bekannte Ausrichteinrichtungen 11 vorhanden, mit denen im Zusammenspiel mit dem Anschlaglineal 39 und/oder der ersten Vorschubeinrichtung 7 ein Ausrichten des Werkstücks 1 möglich ist. Im gezeigten Ausführungsbeispiel handelt es sich bei den Ausrichteinrichtungen 11 um über die Auflageebene des Werkstückauflagetisches 3 anhebbare und darunter absenkbare Nocken, welche parallel zur Richtung 15 und/oder parallel zur Sägelinie 4 verschiebbar sind, um so das Werkstück 1 zum Ausrichten gegen die geöffneten Klemmer 9 der ersten Vorschubeinrichtung 7 und/oder gegen das Anschlaglineal 39 schieben zu können. Dies ist natürlich nur ein Beispiel, wie solche Ausrichteinrichtungen 11 ausgebildet sein können. Alternativ können natürlich auch andere Ausrichteinrichtungen, wie sie beim Stand der Technik an sich bekannt sind, eingesetzt werden. Genauso gut ist es möglich, das Ausrichten des Werkstücks 1, zumindest wenn es sich um eine Einzelplatte handelt, gleich unter Verwendung des Handlinggeräts 16 durchzuführen.

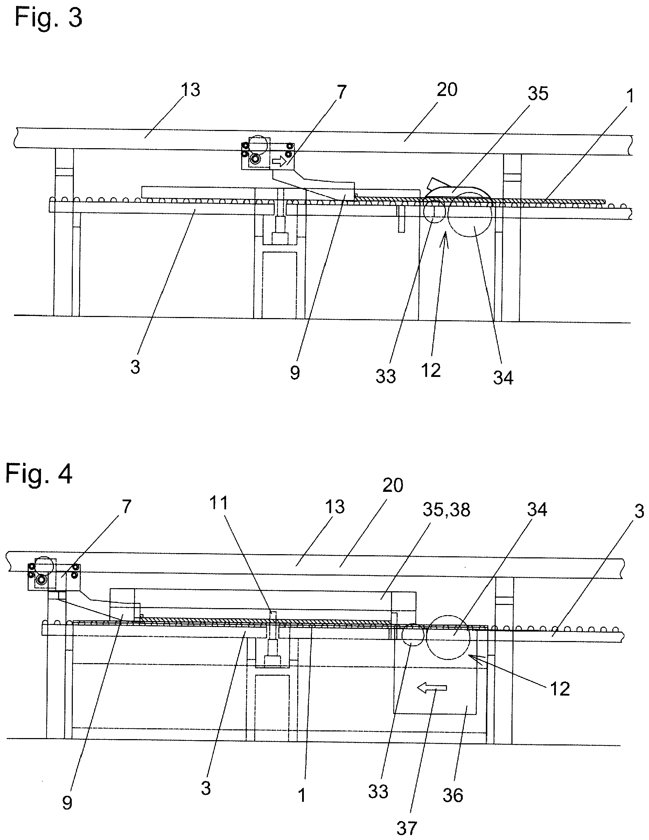

Das Besäumen, also das Herstellen von geraden Außenkanten am Werkstück 1 kann grundsätzlich mit der Trennsäge 5 im Bereich der Sägelinie 4 durchgeführt werden. Im Sinne einer effektiven Arbeitsweise der Plattenaufteilanlage 2 kann es aber, wie hier auch realisiert, günstig sein, wenn im Zuführbereich 27 oder allgemein eben vor der Sägelinie 4 ein Besäumwerkzeug 12 zum Besäumen des Werkstücks 1 an zumindest einer Außenkante des Werkstücks 1 angeordnet ist. Mögliche Ausgestaltungsformen eines solchen zusätzlichen Besäumwerkzeugs 12 werden beispielhaft weiter hinten anhand der Fig. 3 und 4 erläutert.

Fig. 2 zeigt eine schematisierte Seitenansicht bzw. einen Vertikalschnitt durch die Plattenaufteilanlage 2 gemäß Fig. 1 im Bereich der Sägelinie 4 und davor. Die hier schematisiert dargestellte Trennsäge 5 ist als ein Kreissägeblatt ausgeführt. Sie ist, wie an sich bekannt, heb- und senkbar in dem Sägewagen 32 gelagert. Mit dem Sägewagen 32 ist die Trennsäge 5 entlang der Sägelinie 4 verfahrbar, um so die Sägevorgänge bzw. die Trennschnitte durchzuführen. Bei Bedarf kann im Sägewagen 32 noch zusätzlich ein Vorritzersägeblatt vorgesehen sein, so wie dies beim Stand der Technik an sich bekannt ist. Natürlich könnte die Trennsäge auch in anderen an sich bekannten Ausgestaltungsformen gemäß Stand der Technik ausgeführt werden, um die Werkstücke 1 entlang der Sägelinie 4 zu zersägen.

In Fig. 2 ist auch gut zu sehen, wie die beiden Vorschubeinrichtungen 7 und 8 mit ihren Trägern 18 und 19 hintereinander in der bzw. an der gemeinsamen Führung 13 über dem Werkstückauflagetisch 3 verschiebbar gelagert sind. Dabei können die beiden Vorschubeinrichtungen 7 und 8 in den Richtungen parallel zur Richtung 15 nicht aneinander vorbeigefahren werden. Die erste Vorschubeinrichtung 7 bzw. deren Träger 18 ist somit ausschließlich auf der von der Sägelinie 4 abgewandten Seite der weiteren Vorschubeinrichtung 8 bzw. deren Träger 19 in der gemeinsamen Führung 13 verschiebbar. In Fig. 2 ist auch gut zu sehen, dass das Werkstück 1 von der ersten Vorschubeinrichtung 7 zwischen der weiteren Vorschubeinrichtung 8 und dem Werkstückauflagetisch 3 in Richtung hin zur Sägelinie 4 hindurchgeschoben werden kann. Die Klemmer 10 der weiteren Vorschubeinrichtung 8 sind hierzu, wie in Fig. 2 zu sehen, günstigerweise in Richtung 23 nach oben gefahren, also in einer vom Werkstückauflagetisch 3 distanzierten Position angeordnet. Die Bewegung in Richtung 22 und 23 der Klemmer 9 und 10 kann, wie hier realisiert, eine Schwenkbewegung, aber auch eine sonstige Hebe- oder Senkbewegung sein. In Fig. 2 sind auch die jeweils paarweise an den Klemmern vorgesehenen Klemmbacken 38 gut zu sehen, zwischen denen das Werkstück 1 am jeweiligen Klemmer 9 bzw. 10 festgeklemmt werden kann. Im hier gezeigten Ausführungsbeispiel ist der jeweils untere Klemmbacken 38 starr, während der obere Klemmbacken 38 auf den unteren Klemmbacken 38 zu und von diesem wegbewegt werden kann. Dies sind an sich beim Stand der Technik bekannte Ausgestaltungsformen, die aber auch durch andere Ausgestaltungsformen ersetzt werden können.

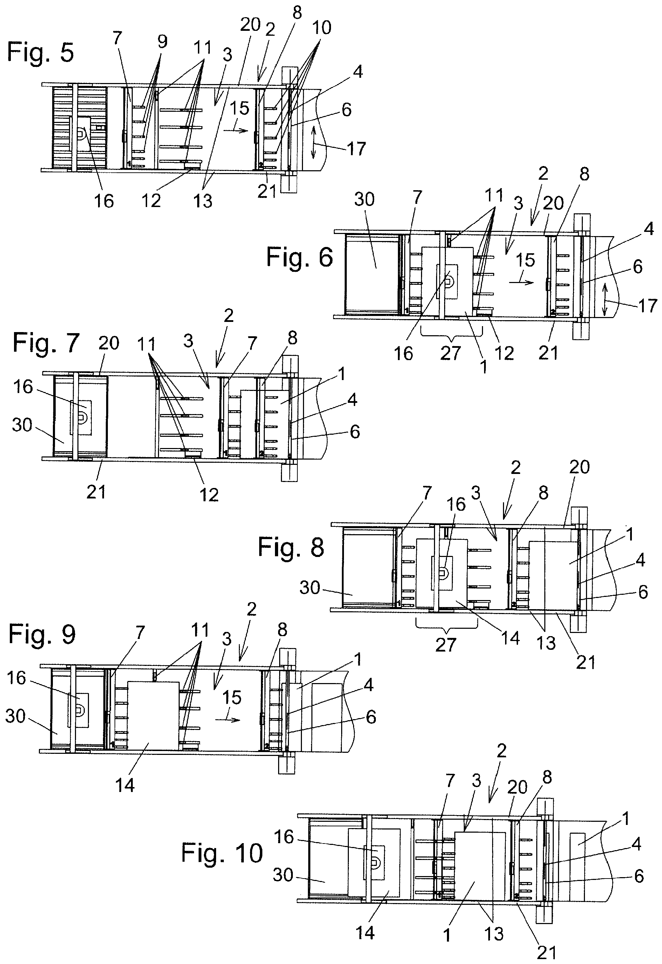

In Fig. 2 ist auch noch einmal das Handlinggerät 16 zu sehen, welches im Ausführungsbeispiel auf den Führungsschienen 20 und 21 der gemeinsamen Führung 13 verfahrbar gelagert ist. In Fig. 2 hat das Handlinggerät 16 mit seiner Werkstückgreifvorrichtung 24 ein weiteres Werkstück 14 bereits gegriffen. Dieses kann, wie weiter unten noch im Detail erläutert, erfindungsgemäß von der ersten Vorschubeinrichtung 7 bereits gegriffen werden, wenn das vorhergehende Werkstück 1 unter Verwendung der weiteren Vorschubeinrichtung 8 noch zersägt wird. Dies wird im Detail beispielhaft weiter unten noch anhand der Fig. 5 bis 16 erläutert.

Fig. 3 zeigt in einem entsprechenden Vertikalschnitt die in Fig. 1 bereits dargestellte Ausführungsform eines Besäumwerkzeugs vergrößert. Es handelt sich hier um ein stationäres Besäumwerkzeug 12 mit einem Vorritzer 33 und einem Sägeblatt 34 sowie einer Absaughaube 35, mit der bei entsprechender Ausgestaltungsform zusätzlich auch das Werkstück 1 auf den Werkstückauflagetisch 3 aufgedrückt werden kann. Diese Art des Besäumwerkzeugs 12 gemäß Fig. 3 ist ortsfest ausgebildet. Der Besäumvorgang wird in diesem Ausführungsbeispiel dadurch realisiert, dass man das an den Klemmern 9 der ersten Vorschubeinrichtung 7 befestigte Werkstück 1 an diesem Besäumwerkzeug 12 vorbeifährt, wobei der Besäumvorgang an der Außenkante des Werkstücks 1 durchgeführt wird.

Eine Alternative hierzu ist in Fig. 4 dargestellt. Hier handelt es sich bei dem Besäumwerkzeug 12 um ein im Besäumwagen 36 gelagertes Sägeblatt 34 mit dem entsprechenden Vorritzer 33, welches in Fahrtrichtung 37, also parallel zur Richtung 15 verfahren werden kann. In diesem Fall wird das zu besäumende Werkstück 1 mittels der in Fig. 4 sichtbaren Ausrichteinrichtung 11 unter den ebenfalls als Absaughaube 35 ausgebildeten Klemmbalken 38 geschoben, dort festgeklemmt und dann durch Verfahren des Besäumwerkzeugs 12 gemäß Fig. 4 entlang der Richtung 37 besäumt.

Auch andere Besäumwerkzeuge 12 sind denkbar. Es kann sich hierbei z.B. um Fräser und dergleichen handeln. Natürlich kann der Besäumvorgang auch an der Trennsäge 5 durchgeführt werden. Falls notwendig, kann das Werkstück 1 vor oder nach dem Besäumen mittels des Handlinggerätes 16 auch um eine vertikale Achse gedreht werden.

Die Serien in den Fig. 5 bis 10 einerseits sowie 11 bis 16 andererseits zeigen jeweils in Draufsichten auf die Plattenaufteilanlage 2 gemäß Fig. 1 verschiedene Betriebszustände anhand derer das erfindungsgemäße Verfahren und bevorzugte Ausgestaltungsformen davon beispielhaft erläutert wird.

Fig. 5 zeigt zunächst eine Draufsicht auf die Plattenaufteilanlage 2 in einem Zustand, in dem noch kein Werkstück 1 vorhanden ist.

In Fig. 6 befindet sich im Plattenlager 30 ein Stapel von Platten, welche mittels des Handlinggerätes 16 in den Zuführbereich 27 des Werkstückauflagetisches 3 transportiert und dort abgelegt werden können. Es kann sich dabei, wie bereits erläutert, bei dem Werkstück 1 um eine Einzelplatte aber auch um einen Plattenstapel handeln. Bevor nun die erste Vorschubeinrichtung 7 dieses so bereitgestellte Werkstück 1 mit seinen Klemmern 9 greift, kann mittels der Ausrichteinrichtung 11 das Werkstück 1 bei Bedarf ausgerichtet und mittels des Besäumwerkzeugs 12 bei Bedarf besäumt werden. Anschließend an dieses Ausrichten und/oder Besäumen oder eben wenn dies nicht benötigt wird, ohne Ausrichten und Besäumen, kann dann die erste Vorschubeinrichtung 7 mit ihren Klemmern 9 das Werkstück 1 im Zuführbereich 27 greifen. Anschließend erfolgt gemäß Verfahrensschritt a) das Verschieben des an den Klemmern 9 der ersten Vorschubeinrichtung 7 festgeklemmten Werkstück 1 auf dem Werkstückauflagetisch 3 mittels der ersten Vorschubeinrichtung 7 zum Positionieren des Werkstücks 1 über der Sägelinie 4, so wie dies in Fig. 7 dargestellt ist. Dabei wird in diesem Ausführungsbeispiel das Werkstück 1 von der ersten Vorschubeinrichtung 7 zwischen der weiteren Vorschubeinrichtung 8 und dem Werkstückauflagetisch 3 hindurchgeschoben, wobei die Klemmer 10 der weiteren Vorschubeinrichtung 8 vom Werkstückauflagetisch 3 distanziert angeordnet sind, so wie dies in Fig. 2 dargestellt ist. Nun wird das Werkstück 1 gemäß Verfahrensschritt b) mittels des Druckbalkens 6 auf den Werkstückauflagetisch 3 im Bereich der Sägelinie 4 angedrückt. Ist dies erledigt, so kann gemäß Verfahrensschritt c) ein Lösen der Klemmer 9 der ersten Vorschubeinrichtung 7 vom Werkstück 1 erfolgen, während das Werkstück 1 vom Druckbalken 6 weiterhin auf dem Werkstückauflagetisch 3 angedrückt wird. Nun kann die erste Vorschubeinrichtung 7 gemäß Verfahrensschritt d) vom Werkstück 1 entfernt werden, während das Werkstück 1 weiterhin vom Druckbalken 6 auf den Werkstückauflagetisch 3 gedrückt wird. Dann kann die weitere Vorschubeinrichtung 8, wie in Fig. 8 gezeigt, gemäß Verfahrensschritt e) am Werkstück 1 positioniert werden. Es kann das Festklemmen des Werkstücks 1 an den Klemmern 10 der weiteren Vorschubeinrichtung 8 erfolgen, während das Werkstück 1 vom Druckbalken 6 weiterhin auf den Werkstückauflagetisch 3 angedrückt wird. Das Zersägen des Werkstücks 1 mittels der Trennsäge 5 entlang der Sägelinie 4 gemäß Verfahrensschritt f) kann während zumindest einem der Verfahrensschritte c) bis e) erfolgen. Anschließend erfolgt im Verfahrensschritt g) ein Abheben des Druckbalkens 6 vom Werkstück 1 und gemäß Verfahrensschritt h) ein Neupositionieren des an den Klemmern 10 der weiteren Vorschubeinrichtung 8 festgeklemmten Werkstücks 1 über der Sägelinie 4 mittels der weiteren Vorschubeinrichtung 8. Nach erneutem Andrücken des Werkstücks 1 auf den Werkstückauflagetisch 3 im Verfahrensschritt i) im Bereich der Sägelinie 4 mittels des Druckbalkens 6 kann dann im Verfahrensschritt j) das Zersägen des Werkstücks 1 mittels der Trennsäge 5 entlang der Sägelinie 4 erfolgen.

Fig. 8 zeigt, wie währenddessen ein weiteres Werkstück 14 im Zuführbereich 27 mittels des Handlinggerätes 16 abgelegt bzw. aufgestapelt werden kann. Dies kann dann, soweit notwendig, wieder entsprechend ausgerichtet und besäumt werden. Vor allem ist es aber möglich, dass während zumindest eines der Verfahrensschritte e) bis j) das weitere Werkstück 14 an den Klemmern 9 der ersten Vorschubeinrichtung 7 festgeklemmt und je nach Position der weiteren Vorschubeinrichtung 8 von der ersten Vorschubeinrichtung 7 bereits ein Stück weit auf dem Werkstückauflagetisch 3 in Richtung 15 hin zur Sägelinie 4 verschoben werden kann. Ist das vorgelagerte Werkstück 1 dann durch gegebenenfalls mehrfaches Durchführen der Verfahrensschritte g) bis j) unter Verwendung der weiteren Vorschubeinrichtung 8 fertig aufgeteilt, so kann dieses weitere Werkstück 14 nun als weiter zu zersägendes Werkstück 1 von der ersten Vorschubeinrichtung 7 wieder über der Sägelinie 4 positioniert werden, sodass das erfindungsgemäße Verfahren dann an dem weiteren Werkstück 14, welches nun das zu bearbeitende Werkstück 1 bildet, durchgeführt werden kann, um auch dieses Werkstück zu zersägen.

Im den bisher beispielhaft geschilderten Ablauf erfolgt der Wechsel von erster Vorschubeinrichtung 7 auf die Verwendung der zweiten Vorschubeinrichtung 8 während des ersten Trennschnitts an dem ursprünglichen, vorzugsweise bereits besäumten, Werkstück 1. Dies muss, wie eingangs erläutert, nicht so sein. Zwischen dem ersten Andrücken des noch an den Klemmer 9 der ersten Vorschubeinrichtung 7 festgeklemmten Werkstücks auf den Werkstückauflagetisch 3 im Bereich der Sägelinie 4 mittels des Druckbalkens 6 im Verfahrensschritt b) und dem Lösen der Klemmer 9 der ersten Vorschubeinrichtung 7 im Verfahrensschritt c) können, wie eingangs bereits erläutert, auch weitere Verfahrensschritte vorgesehen sein. Diese können z.B. darin bestehen, dass das nach wie vor an den Klemmer 9 der ersten Vorschubeinrichtung 7 festgeklemmte Werkstück 1 mittels der Trennsäge 5 entlang der Sägelinie 4 zersägt wird, anschließend der Druckbalken 6 vom Werkstück 1 abgehoben wird. Daran anschließend das Werkstück 1 von der ersten Vorschubeinrichtung auf der Sägelinie 4 neu positioniert und dann mittels des Druckbalkens 6 im Bereich der Sägelinie 4 wieder auf den Werkstückauflagetisch 3 angedrückt wird, bevor dann die Klemmer 9 der ersten Vorschubeinrichtung 7 im Verfahrensschritt c) vom Werkstück 1 gelöst und die weiteren Verfahrensschritte d) bis j) durchgeführt werden. Das Lösen der Klemmer 9 der ersten Vorschubeinrichtung 7 und das Befestigen des Werkstücks 1 an den Klemmern 10 der weiteren Vorschubeinrichtung 8 muss also nicht zwingend während des ersten Trennschnitts am Werkstück 1 erfolgen, sondern kann durchaus auch späteren z.B. bei nachgelagerten Trennschnitten durchgeführt werden.

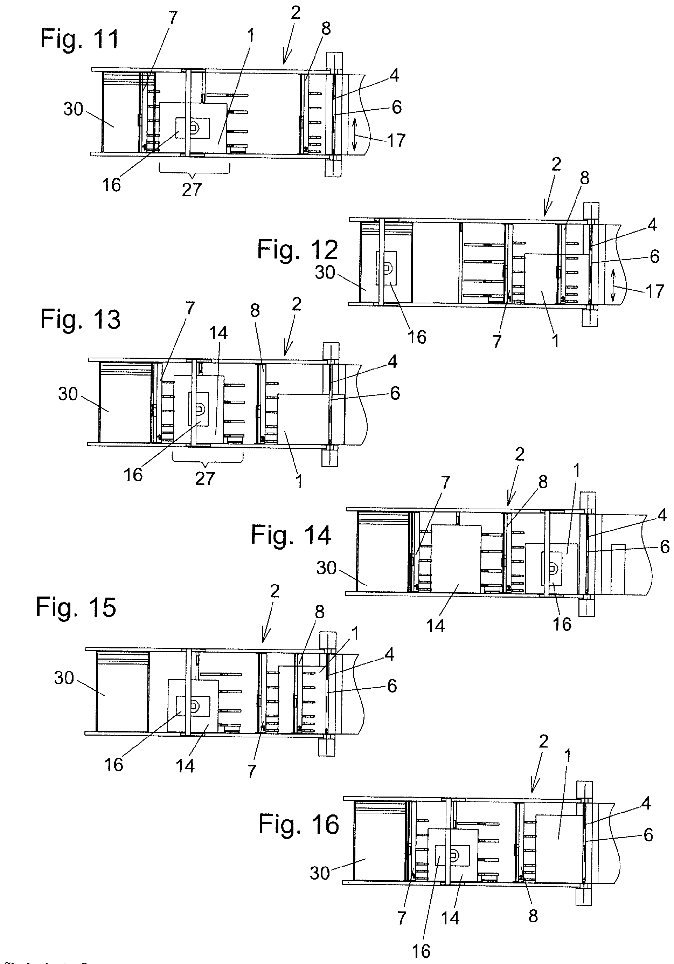

Anhand des Ablaufs gemäß der Fig. 11 bis 16 werden beispielhaft weitere Möglichkeiten der Variationen des erfindungsgemäßen Verfahrensablaufes dargestellt. So wird in Fig. 11 gezeigt, dass das Werkstück 1 vor dem Verfahrensschritt a) zunächst mittels des Handlinggerätes 16, um die vertikale Achse gedreht und dann erst im Zuführbereich 27 abgelegt werden kann, um dann gegebenenfalls im Anschluss an einen entsprechenden Ausricht- und/oder Besäumvorgang von den Klemmern 9 der ersten Vorschubeinrichtung 7 festgeklemmt und dann mittels der ersten Vorschubeinrichtung 7 über der Sägelinie 4 positioniert zu werden, wie dies dann in Fig. 12 gezeigt ist. Anschließend kann das Abarbeiten der Verfahrensschritte a) bis j) erfolgen, während gemäß Fig. 13 nach dem Zurückziehen der ersten Vorschubeinrichtung 7 ein weiteres Werkstück 14 vom Handlinggerät 16 im Zuführbereich 27 abgelegt wird. Auch dieses weitere Werkstück 14 kann dann bei Bedarf besäumt und ausgerichtet werden, bevor es an den Klemmern 9 der ersten Vorschubeinrichtung 7 festgeklemmt wird. Ab Fig. 14 ist dann sogar beispielhaft gezeigt, dass das an den Klemmern 10 der weiteren Vorschubeinrichtung 8 festgeklemmte Werkstück 1 gar nicht fertig zersägt werden muss, sondern vielmehr auch als Zwischenprodukt vom Handlinggerät 16 wieder entgegen der Richtung 17 von der Sägelinie 4 nach hinten weg transportiert werden kann, während die erste Vorschubeinrichtung 7 das bisherige weitere Werkstück 14 als neues Werkstück 1 über der Sägelinie 4 gemäß Verfahrensschritt a) positioniert. Fig. 16 zeigt dann wie dieses nun so positionierte neue Werkstück 1 gemäß der erfindungsgemäßen Verfahrensschritte e) bis j) zersägt wird, während das bisherige nun nach hinten transportierte und nun als weiteres Werkstück 14 bezeichnete Werkstück neu ausgerichtet und von den an den Klemmern 9 der ersten Vorschubeinrichtung 7 wieder festgeklemmt wird.

Dies zeigt beispielhaft, dass der erfindungsgemäße Ablauf der Verfahrensschritte a) bis j) in einer Vielzahl von Ausgestaltungsformen gegebenenfalls mit diversen zwischengelagerten Verfahrensschritten ausgeführt werden kann, um so ein zeitlich optimiertes Aufteilen bzw. Zersägen von entsprechenden Werkstücken 1 zu ermöglichen.

### Legende

Zu den Hinweisziffern

| | | | |
|---|---|---|---|
| 1 | Werkstück | 26 | Heb- und Senkvorrichtung |
| 2 | Plattenaufteilanlage | | |
| 3 | Werkstückauflagetisch | 27 | Zuführbereich |
| 4 | Sägelinie | 28 | Arbeitsbereich |
| 5 | Trennsäge | 29 | Druckbalkensteher |
| 6 | Druckbalken | 30 | Plattenlager |
| 7 | erste Vorschubeinrichtung | 31 | Entnahmebereich |
| | | 32 | Sägewagen |
| 8 | weitere Vorschubeinrichtung | 33 | Vorritzer |
| | | 34 | Sägeblatt |
| 9 | Klemmer | 35 | Absaughaube |
| 10 | Klemmer | 36 | Besäumwagen |
| 11 | Ausrichteinrichtung | 37 | Fahrrichtung |
| 12 | Besäumwerkzeug | 38 | Klemmbacken |
| 13 | gemeinsame Führung | 39 | Anschlaglineal |
| 14 | weiteres Werkstück | | |
| 15 | Richtung | | |
| 16 | Handlinggerät | | |
| 17 | Richtung | | |
| 18 | Träger | | |
| 19 | Träger | | |
| 20 | Führungsschiene | | |
| 21 | Führungs schiene | | |
| 22 | Richtung | | |
| 23 | Richtung | | |
| 24 | Werkstückgreifvorrichtung | | |
| 25 | Drehvorrichtung | | |

## Patentansprüche

1. Verfahren zum Zersägen zumindest eines Werkstücks (1), bestehend aus einer Platte oder einem Plattenstapel, mit einer Plattenaufteilanlage (2), wobei die Plattenaufteilanlage (2) einen Werkstückauflagetisch (3) und eine, entlang einer Sägelinie (4) verfahrbare Trennsäge (5) und einen Druckbalken (6) zum Andrücken des Werkstücks (1) auf den Werkstückauflagetisch (3) im Bereich der Sägelinie (4) und eine erste Vorschubeinrichtung (7) zum Verschieben des auf dem Werkstückauflagetisch (3) liegenden Werkstücks (1) und eine weitere Vorschubeinrichtung (8) zum Verschieben des auf dem Werkstückauflagetisch (3) liegenden Werkstücks (1) aufweist, wobei beide Vorschubeinrichtungen (7, 8) jeweils Klemmer (9, 10) zum Festklemmen des Werkstücks (1) aufweisen, **dadurch gekennzeichnet, dass** bei dem Verfahren zumindest die folgenden Verfahrensschritte nacheinander ausgeführt werden:
a) Verschieben des an den Klemmern (9) der ersten Vorschubeinrichtung (7) festgeklemmten Werkstücks (1) auf dem Werkstückauflagetisch (3) mittels der ersten Vorschubeinrichtung (7) zum Positionieren des Werkstücks (1) über der Sägelinie (4);
b) Andrücken des Werkstücks (1) auf den Werkstückauflagetisch (3) im Bereich der Sägelinie (4) mittels des Druckbalkens (6);
c) Lösen der Klemmer (9) der ersten Vorschubeinrichtung (7) vom Werkstück (1) während das Werkstück (1) vom Druckbalken (6) weiterhin auf den Werkstückauflagetisch (3) angedrückt wird;
d) Entfernen der ersten Vorschubeinrichtung (7) vom Werkstück (1) während das Werkstück (1) vom Druckbalken (6) weiterhin auf den Werkstückauflagetisch (3) angedrückt wird;
e) Positionieren der weiteren Vorschubeinrichtung (8) am Werkstück (1) und Festklemmen des Werkstücks (1) an den Klemmern (10) der weiteren Vorschubeinrichtung (8) während das Werkstück (1) vom Druckbalken (6) weiterhin auf den Werkstückauflagetisch (3) angedrückt wird;
f) Zersägen des Werkstücks (1) mittels der Trennsäge (5) entlang der Sägelinie (4) während zumindest einem der Verfahrensschritte c) bis e);
g) Abheben des Druckbalkens (6) vom Werkstück (1);
h) Neu-Positionieren des an den Klemmern (10) der weiteren Vorschubeinrichtung (8) festgeklemmten Werkstücks (1) über der Sägelinie (4) mittels der weiteren Vorschubeinrichtung (8);
i) Andrücken des Werkstücks (1) auf den Werkstückauflagetisch (3) im Bereich der Sägelinie (4) mittels des Druckbalkens (6);
j) Zersägen des Werkstücks (1) mittels der Trennsäge (5) entlang der Sägelinie (4).

2. Verfahren nach Anspruch 1, **dadurch gekennzeichnet, dass** das Werkstück (1) vor dem Verfahrensschritt a), vorzugsweise mittels der ersten Vorschubeinrichtung (7) und/oder mittels zumindest einer Ausrichteinrichtung (11) der Plattenaufteilanlage (2), auf dem Werkstückauflagetisch (3) ausgerichtet wird.

3. Verfahren nach Anspruch 1 oder 2, **dadurch gekennzeichnet, dass** das Werkstück (1) vor dem Verfahrensschritt a) mittels eines Besäumwerkzeugs (12) der Plattenaufteilanlage (2) an zumindest einer Außenkante des Werkstücks (1) besäumt wird.

4. Verfahren nach einem der Ansprüche 1 bis 3, **dadurch gekennzeichnet, dass** die erste Vorschubeinrichtung (7) und die weitere Vorschubeinrichtung (8) hintereinander in einer gemeinsamen Führung (13) der Plattenaufteilanlage (2) über dem Werkstückauflagetisch (3) verschoben werden, wobei die erste Vorschubeinrichtung (7) ausschließlich auf der von der Sägelinie (4) abgewandten Seite der weiteren Vorschubeinrichtung (8) in der gemeinsamen Führung (13) verschiebbar ist.

5. Verfahren nach einem der Ansprüche 1 bis 4, **dadurch gekennzeichnet, dass** das Werkstück (1) während des Verfahrensschrittes a) von der ersten Vorschubeinrichtung (7) zwischen der weiteren Vorschubeinrichtung (8) und dem Werkstückauflagetisch (3) hindurchgeschoben wird.

6. Verfahren nach einem der Ansprüche 1 bis 5, **dadurch gekennzeichnet, dass** die Klemmer (10) der weiteren Vorschubeinrichtung (8) während der Verfahrensschritte a) bis d) in einer vom Werkstückauflagetisch (3) distanzierten Position angeordnet werden.

7. Verfahren nach einem der Ansprüche 1 bis 6, **dadurch gekennzeichnet, dass** während zumindest eines der Verfahrensschritte e) bis j), an den Klemmern (9) der ersten Vorschubeinrichtung (7) ein weiteres Werkstück (14) festgeklemmt und vorzugsweise von der ersten Vorschubeinrichtung (7) auf dem Werkstückauflagetisch (3) ein Stück weit in Richtung (15) hin zur Sägelinie (4) verschoben wird.

8. Verfahren nach einem der Ansprüche 1 bis 7, **dadurch gekennzeichnet, dass** die Verfahrensschritte g) bis j) unter Verwendung der weiteren Vorschubeinrichtung (8) mehrfach hintereinander ausgeführt werden.

9. Verfahren nach einem der Ansprüche 1 bis 8, **dadurch gekennzeichnet, dass** das Zersägen des Werkstücks (1) mittels der Trennsäge (5) entlang der Sägelinie (4) während des Verfahrensschrittes f) der erste Trennschnitt am ursprünglichen, vorzugsweise bereits besäumten, Werkstück (1) ist.

10. Verfahren nach einem der Ansprüche 1 bis 9, **dadurch gekennzeichnet, dass** das Werkstück (1) mittels eines über der ersten Vorschubeinrichtung (7) und/oder der weiteren Vorschubeinrichtung (8) verfahrbar gelagerten Handlinggerätes (16) über dem Werkstückauflagetisch (3) transportiert und/oder gedreht und/oder mittels des Handlinggerätes (16) vom Werkstückauflagetisch (3) abgehoben und/oder auf diesem abgelegt wird.

11. Verfahren nach Anspruch 11, **dadurch gekennzeichnet, dass** das Werkstück (1) mittels des Handlinggerätes (16) der ersten Vorschubeinrichtung (7) vor dem Verfahrensschritt a) zugeführt wird.

12. Plattenaufteilanlage (2) zum Zersägen von zumindest einem Werkstück (1), bestehend aus einer Platte oder einem Plattenstapel, insbesondere mit einem Verfahren nach einem der Ansprüche 1 bis 11, wobei die Plattenaufteilanlage (2) einen Werkstückauflagetisch (3) und eine, entlang einer Sägelinie (4) verfahrbare Trennsäge (5) und einen Druckbalken (6) zum Andrücken des Werkstücks (1) auf den Werkstückauflagetisch (3) im Bereich der Sägelinie (4) und eine erste Vorschubeinrichtung (7) zum Verschieben des auf dem Werkstückauflagetisch (3) liegenden Werkstücks (1) und eine weitere Vorschubeinrichtung (8) zum Verschieben des auf dem Werkstückauflagetisch (3) liegenden Werkstücks (1) aufweist, wobei beide Vorschubeinrichtungen (7, 8) jeweils Klemmer (9, 10) zum Festklemmen des Werkstücks (1) aufweisen, **dadurch gekennzeichnet, dass** die erste Vorschubeinrichtung (7) und die weitere Vorschubeinrichtung (8) hintereinander in einer gemeinsamen Führung (13) der Plattenaufteilanlage (2) über dem Werkstückauflagetisch (3) verschiebbar gelagert sind, und die erste Vorschubeinrichtung (7) ausschließlich auf der von der Sägelinie (4) abgewandten Seite der weiteren Vorschubeinrichtung (8) in der gemeinsamen Führung (13) verschiebbar ist.

13. Plattenaufteilanlage (2) nach Anspruch 12, **dadurch gekennzeichnet, dass** die erste Vorschubeinrichtung (7) und die weitere Vorschubeinrichtung (8) jeweils einen in Richtung (17) parallel zur Sägelinie (4) längserstreckten Träger (18, 19) aufweisen, wobei die Träger (18, 19) hintereinander in der gemeinsamen Führung (13) über dem Werkstückauflagetisch (3) verschiebbar gelagert sind und die Klemmer (9) der jeweiligen Vorschubeinrichtung (7, 8) am Träger (18, 19) der jeweiligen Vorschubeinrichtung (7, 8), vorzugsweise verschiebbar, angeordnet sind.

14. Plattenaufteilanlage (2) nach Anspruch 12 oder 13,
**dadurch gekennzeichnet, dass** die gemeinsame Führung (13) zwei voneinander distanziert angeordnete Führungsschienen (20, 21) aufweist, wobei die Träger (18, 19) der Vorschubeinrichtungen (7, 8) hintereinander in den Führungsschienen (20, 21) gelagert sind.

15. Plattenaufteilanlage (2) nach einem der Ansprüche 12 bis 14, **dadurch gekennzeichnet, dass** die Klemmer (9) der ersten Vorschubeinrichtung (7) und/oder die Klemmer (10) der weiteren Vorschubeinrichtung (8) in Richtung (22) zum Werkstückauflagetisch (3) hin absenkbar und in Richtung (23) vom Werkstückauflagetisch (3) weg abhebbar und/oder individuell an der jeweiligen Vorschubeinrichtung (7, 8) parallel zur Sägelinie (4) verschiebbar ausgebildet sind.

16. Plattenaufteilanlage (2) nach einem der Ansprüche 12 bis 15, **dadurch gekennzeichnet, dass** sie ein über der ersten Vorschubeinrichtung (7) und/oder der weiteren Vorschubeinrichtung (8) verfahrbar gelagertes Handlinggerät (16) aufweist.

17. Plattenaufteilanlage (2) nach Anspruch 16, **dadurch gekennzeichnet, dass** das Handlinggerät (16) eine Werkstückgreifvorrichtung (24), vorzugsweise Saugvorrichtung, zum Greifen des Werkstücks (1) und/oder eine Drehvorrichtung (25) zum Drehen des Werkstücks (1) und/oder eine Heb- und Senkvorrichtung (26) zum Anheben und zum Absenken des Werkstücks (1) aufweist.

18. Plattenaufteilanlage (2) nach Anspruch 16 oder 17, **dadurch gekennzeichnet, dass** das Werkstück (1) mittels des Handlinggeräts (16) in einen Zuführbereich (27) auf dem Werkstückauflagetisch (3) zuführbar ist und der Zuführbereich (27) in einem Arbeitsbereich (28) der ersten Vorschubeinrichtung (7) liegt, in dem die erste Vorschubeinrichtung (7) das Werkstück (1) an seinen Klemmern (9) festklemmen kann und aus dem die erste Vorschubeinrichtung (7) das Werkstück (1) zur Sägelinie (4) schieben kann.

19. Plattenaufteilanlage (2) nach Anspruch 18, **dadurch gekennzeichnet, dass** im Zuführbereich (27) zumindest eine Ausrichteinrichtung (11) der Plattenaufteilanlage (2) zum Ausrichten des Werkstücks (1) auf dem Werkstückauflagetisch (3) angeordnet ist.

20. Plattenaufteilanlage (2) nach Anspruch 18 oder 19, **dadurch gekennzeichnet, dass** im Zuführbereich (27) ein Besäumwerkzeug (12) der Plattenaufteilanlage (2) zum Besäumen des Werkstücks (1) an zumindest einer Außenkante des Werkstücks (1) angeordnet ist.
